(11) **EP 2 031 216 B1**

(12) **EUROPÄISCHE PATENTSCHRIFT**

(45) Veröffentlichungstag und Bekanntmachung des Hinweises auf die Patenterteilung:
**07.09.2016 Patentblatt 2016/36**

(51) Int Cl.:
*F02D 41/00* *(2006.01)* *F02D 21/08* *(2006.01)*
*F02D 13/02* *(2006.01)*

(21) Anmeldenummer: **08012285.6**

(22) Anmeldetag: **08.07.2008**

(54) **Verfahren zum Betreiben einer Brennkraftmaschine**

Method for operating a combustion engine

Procédé destiné au fonctionnement d'un moteur à combustion interne

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.08.2007 DE 102007041321**

(43) Veröffentlichungstag der Anmeldung:
**04.03.2009 Patentblatt 2009/10**

(73) Patentinhaber: **Volkswagen Aktiengesellschaft 38440 Wolfsburg (DE)**

(72) Erfinder: **Groenendijk, Axel 38518 Gifhorn (DE)**

(56) Entgegenhaltungen:
EP-A1- 1 460 253 DE-A1- 3 940 752
DE-A1-102005 012 306 DE-A1-102006 009 958

**Beschreibung**

Die Erfindung betrifft ein Verfahren zum Betreiben einer Brennkraftmaschine, insbesondere Dieselmotor oder Ottomotor, insbesondere eines Kraftfahrzeugs, mit einer externen Abgasrückführung, wobei ein Schließzeitpunkt von Einlassventilen der Brennkraftmaschine verändert wird, gemäß dem Oberbegriff des Patentanspruchs 1.

Die Abgasrückführung, wie beispielsweise aus der DE 2005 012 306 A1 bekannt, ist eine der wesentlichen Elemente der innermotorischen $NO_x$-Reduzierung bei einem Dieselmotor. Man unterscheidet die externe Abgasrückführung mit gekühlten und ungekühlten Varianten von der "internen" oder "inneren" AGR. Bei Letzteren wird das Verbleiben oder Zurückführen von Restgas i.A. durch Beeinflussung der Gaswechselventilsteuerzeiten mittels eines zusätzlichen Öffnens von Ein- oder Auslass oder einer negativen Ventilüberschneidung über einen variablen Ventiltrieb realisiert. Vorteilhaft gegenüber der externen AGR sind dabei die kurzen Wege und die schnellen Reaktionszeiten sowie die direkte Dosierbarkeit. Nachteilig ist allerdings das Fehlen einer wirksamen Abkühlung des Restgases, wie bei der externen Rückführung. Aus diesem Grund wird häufig vorgeschlagen, eine (Grund-) AGR-Menge über den externen, gekühlten AGR-Kreislauf dem Motor bereitzustellen und einen geringeren Anteil innerer AGR zur Anpassung des Luftverhältnisses bei Lastsprüngen schnell zu- bzw. wegzuschalten.

Die deutsche Offenlegungsschrift DE 10 2006 009958 A1 offenbart ein System zum Steuern des Luft-Kraftstoff-Verhältnisses in einem Verbrennungsmotor. Das System umfasst eine Lufteinlassleitung, die mit einem Ansaugkrümmer gekoppelt ist, ein EGR-Ventil, das in Reihe mit einer EGR-Leitung angeordnet ist und auf ein Ventilsteuersignal reagiert, einen Lambdasensor, der ein Lambdasignal erzeugt, das das Luft-Kraftstoff-Verhältnis des Abgases angibt, und einen Steuerschaltkreis, der das Ventilsteuersignal in Abhängigkeit eines Soll-Lufmassenstromwerts, eines Soll-Luft-Kraftstoff-Verhältnisses und des Lambdasignals erzeugt.

Die europäische Patentanmeldung EP 1 460 253 A1 offenbart ein Verfahren zum Justieren der Schließzeit des Einlassventils, um den Lambdawert zu steuern.

Der Erfindung liegt die Aufgabe zugrunde, ein Verfahren der o.g. Art hinsichtlich der Lambdaregelung zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in einem Betriebszustand der Brennkraftmaschine, in dem der momentane Lambdawert höher ist als ein gewünschter Ziel-Lambdawert zum Absenken des momentanen Lambdawertes ein Anteil des extern zurückgeführten Abgases erhöht wird und danach zum weiteren Absenken des momentanen Lambdawertes der Schließzeitpunkt des Einlassventiles von früh nach spät verschoben wird, bis der Ziel-Lambdawert erreicht ist.

Dies hat den Vorteil, dass eine zyklusgenaue und schnelle Lambdaregelung auch im instationären Betrieb der Brennkraftmaschine zur Verfügung steht.

Zum Verändern des Schließzeitpunktes der Einlassventile wird wenigstens eine Nockenwelle der Brennkraftmaschine mittels eines Nockenwellenverstellers verstellt.

Beispielsweise wird die Nockenwelle um einen Kurbelwinkel von 0°KW bis 80°KW verstellt.

Zweckmäßigerweise wird vor dem Erhöhen des Anteiles des extern zugeführten Abgases der Schließzeitpunkt der Einlassventile nach früh auf einen füllungsoptimalen, leistungsoptimalen oder emissionsoptimalen Wert eingestellt.

Beispielsweise wird vor dem Erhöhen des Anteiles des extern zugeführten Abgases der Schließzeitpunkt der Einlassventile von einem füllungsoptimalen, Leistungsoptimalen oder emissionsoptimalen Wert nach früh eingestellt.

Die Erfindung wird im Folgenden anhand der Zeichnung näher erläutert. Diese zeigt in

Fig. 1    eine schematische Darstellung der Massenströme bei einer Brennkraftmaschine und

Fig.2    eine graphische Darstellung der Mengenanteile an der Gesamtbeladung eines Arbeitszylinder der Brennkraftmaschine pro Zyklus.

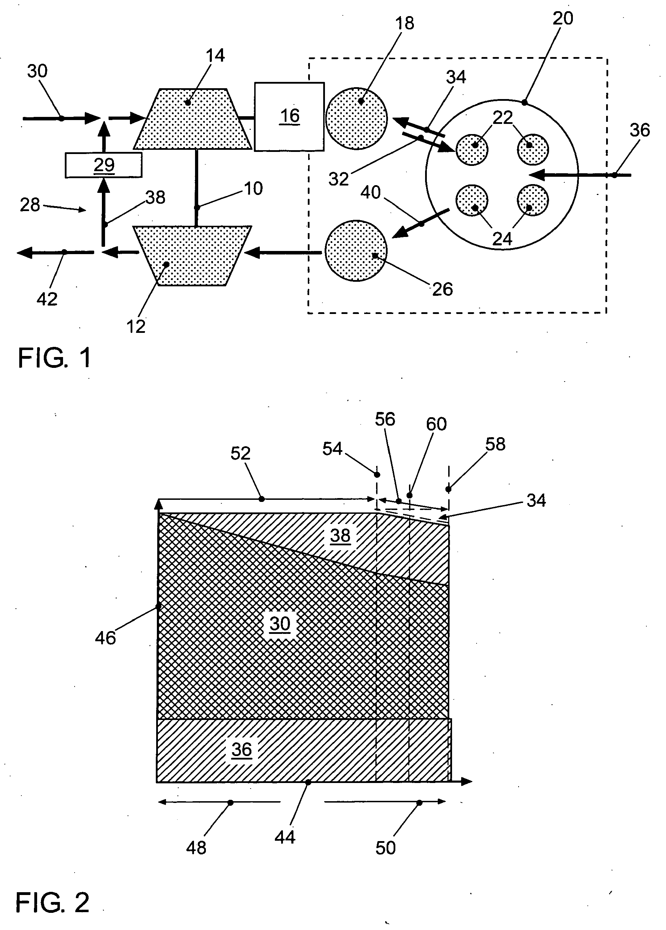

Die in Fig. 1 schematisch dargestellte Brennkraftmaschine umfasst einen Abgasturbolader 10 mit einer Turbine 12 und einem Verdichter 14, einen Ladeluftkühler 16, ein Saugrohr 18, Arbeitszylinder 20 mit jeweils zwei Einlassventilen 22 und zwei Auslassventilen 24, wobei lediglich ein Arbeitszylinder 20 beispielhaft dargestellt ist, und einen Abgaskrümmer 26, in den das Abgas aus den Auslassventilen 24 strömt. Stromab der Turbine 12 ist für eine externe Abgasrückrührung (eAGR) eine Verbindung 28 vom Abgastrakt zum Ansaugtrakt vorhanden, in welcher ein AGR-Kühler 29 angeordnet ist.

Folgende Massenströme bzw. Massen tragen zu einer Zylinderladung $m_z$ bei: Eine Luftmasse $m_L$ 30, eine Einlassmasse $m_{EZ}$ 32, eine Steuermengenmasse $m_{Steuermenge}$ 34, eine Kraftstoffmasse $m_{Kr}$ 36 sowie ein Masse des extern zurückgeführten Abgases $m_{eAGR}$ 38. Die Steuermengenmasse $m_{Steuermenge}$ 34 wird durch den Schließzeitpunkt der Einlassventile 22 bestimmt. Schließen diese spät, so wird ein Teil der Zylinderladung im Kompressionshub wieder ausgeschoben und verringert dadurch die Zylinderladung $m_Z$. Insgesamt ergibt sich somit:

$$m_Z = m_{EZ} - m_{Steuermenge} + m_{Kr} = m_L + m_{eAGR} - m_{Steuermenge} + m_{Kr}$$

Der Lambdawert einer derartigen Zylinderladung berechnet sich gemäß

$$\lambda = \frac{m_L}{14{,}5 \cdot m_{Kr}}$$

Hieraus ist unmittelbar ersichtlich, dass bei konstanter Zylinderladung $m_Z$ eine Erhöhung von $m_{eAGR}$ 38 den Lambdawert verringert, da die Luftmenge $m_L$ 30 sinkt.

Weitere Massenströme bzw. Massen ergeben sich abgasseitig. Hier gibt es eine Auslassmasse $m_{AZ}$ 40 und eine Abgasmasse $m_A$ 42, wobei gilt

$$m_A = m_{AZ} - m_{eAGR}$$

In Fig. 2 ist auf der horizontalen Achse 44 ein momentaner Lambdawert $\lambda_a$ und auf der vertikalen Achse 46 die Zylinderladung $m_Z$ aufgetragen. In Richtung von Pfeil 48 ergeben sich höhere Lambdawerte $\lambda_a$ und in Richtung von Pfeil 50 ergeben sich niedrigere Lambdawerte $\lambda_a$. In dem Diagramm sind die jeweiligen Anteile von Kraftstoffmasse $m_{Kr}$ 36, Luftmasse $m_L$ 30 und Masse des extern zurückgeführten Abgases $m_{eAGR}$ 38 eingetragen.

Fig. 2 veranschaulicht das erfindungsgemäße Verfahren. Zunächst wird der Schließzeitpunkt der Einlassventile 22 nach früh auf einen füllungsoptimalen Wert eingestellt. In einem ersten Schritt 52 wird dann das Luftverhältnis durch Erhöhen der Masse des extern zurückgeführten Abgases $m_{eAGR}$ 38 erniedrigt, bis der Lambdawert 54 erreicht ist. Diese Absenkung des momentanen Lambdawertes $\lambda_a$ in Schritt 52 ist durch die maximal mögliche Masse des extern zurückgeführten Abgases $m_{eAGR}$ 38 begrenzt, da bei zu hoher Masse des extern zurückgeführten Abgases $m_{eAGR}$ 38 eine zu starke Laufunruhe eintritt.

In einem nachfolgenden zweiten Schritt 56 wird dann der Schließzeitpunkt der Einlassventile 22 nach spät verstellt, so dass sich die Steuermengenmasse $m_{Steuermenge}$ 34 erhöht. Dies führt zu einer weiteren Absenkung des Lambdawertes, da gleichzeitig die Kraftstoffmasse $m_{Kr}$ 36 konstant bleibt. Mit 58 ist ein Lambdawert gekennzeichnet, welcher mit der maximalen Spätverstellung der Einlassventile 22 erreichbar ist. Die Spätverstellung der Einlassventile 22 erfolgt derart, dass ein Ziellambdawert $\lambda_{Ziel}$ 60 erreicht wird.

Während der erste Schritt 52 zeitlich langsam zu einer Veränderung des momentanen Lambdawertes $\lambda_a$ führt, kann im zweiten Schritt 56 der Ziellambdawert $\lambda_{Ziel}$ 60 zeitlich schnell eingeregelt werden.

Somit ist eine zyklusgenaue Kontrolle des aus der Abgasrückführung resultierenden Luftverhältnisses $\lambda$ im Luftpfad möglich. Dies ist insbesondere im instationären Betrieb einer BKM für eine genaue und schnelle Dosierung bzw. Korrektur der rückgeführten Abgasmenge vorteilhaft. Das emissions- bzw. füllungsoptimale Luftverhältnis kann daher besonders im instationären Betrieb schnell korrigiert werden.

**Patentansprüche**

1.   Verfahren zum Betreiben einer Brennkraftmaschine mit einer externen Abgasrückführung, wobei ein Schließzeitpunkt von Einlassventilen der Brennkraftmaschine verändert wird, wobei in einem Betriebszustand der Brennkraftmaschine, in dem der momentane Lambdawert höher ist als ein gewünschter Ziel-Lambdawert zum Absenken des momentanen Lambdawertes ein Anteil des extern zurückgeführten Abgases erhöht wird und danach zum weiteren Absenken des momentanen Lambdawertes der Schließzeitpunkt des Einlassventiles nach spät verschoben wird, bis der Ziel-Lambdawert erreicht ist.

2.   Verfahren nach Anspruch 1, **dadurch gekennzeichnet, dass** zum Verändern des Schließzeitpunktes der Einlassventile wenigstens eine Nockenwelle der Brennkraftmaschine mittels eines Nockenwellenverstellers verstellt wird.

3.   Verfahren nach Anspruch 2, **dadurch gekennzeichnet, dass** die Nockenwelle um einen Kurbelwinkel von 0°KW bis 80°KW verstellt wird.

**4.** Verfahren nach wenigstens einem der vorhergehenden Ansprüche, **dadurch gekennzeichnet, dass** vor dem Erhöhen des Anteiles des extern zugeführten Abgases der Schließzeitpunkt der Einlassventile nach früh auf einen füllungsoptimalen, leistungsoptimalen oder emissionsoptimalen Wert eingestellt wird.

**5.** Verfahren nach wenigstens einem der vorhergehenden Ansprüche, **dadurch gekennzeichnet, dass** vor dem Erhöhen des Anteiles des extern zugeführten Abgases der Schließzeitpunkt der Einlassventile von einem füllungsoptimalen, leistungsoptimalen oder emissionsoptimalen Wert nach früh eingestellt wird.

**6.** Verfahren nach wenigstens einem der vorhergehenden Ansprüche, **dadurch gekennzeichnet, dass** es sich bei der Brennkraftmaschine um die Brennkraftmaschine eines Kraftfahrzeugs handelt.

**7.** Verfahren nach wenigstens einem der vorhergehenden Ansprüche, wobei es sich bei der Brennkraftmaschine um einen Dieselmotor oder einen Ottomotor handelt.

**Claims**

**1.** Method for operating an internal combustion engine with an external exhaust-gas recirculation arrangement, wherein a closing time of inlet valves of the internal combustion engine is varied, wherein, when the internal combustion engine is in an operating state in which the present lambda value is higher than a desired target lambda value, in order to lower the present lambda value, a fraction of externally recirculated exhaust gas is increased, and thereafter, in order to further lower the present lambda value, the closing time of the inlet valve is retarded until the target lambda value is obtained.

**2.** Method according to Claim 1, **characterized in that**, for the variation of the closing time of the inlet valves, at least one camshaft of the internal combustion engine is adjusted by way of a camshaft adjuster.

**3.** Method according to Claim 2, **characterized in that** the camshaft is adjusted by a crank angle of 0°CA to 80°CA.

**4.** Method according to at least one of the preceding claims, **characterized in that**, before the increase of the fraction of externally supplied exhaust gas, the closing time of the inlet valves is advanced to a charge-air optimized, power-optimized or emission-optimized value.

**5.** Method according to at least one of the preceding claims, **characterized in that**, before the increase of the fraction of externally supplied exhaust gas, the closing time of the inlet valves is advanced proceeding from a charge-air optimized, power-optimized or emissions-optimized value.

**6.** Method according to at least one of the preceding claims, **characterized in that** the internal combustion engine is the internal combustion engine of a motor vehicle.

**7.** Method according to at least one of the preceding claims, wherein the internal combustion engine is a diesel engine or a gasoline engine.

**Revendications**

**1.** Procédé pour faire fonctionner un moteur à combustion interne comprenant une recirculation de gaz d'échappement externe, un instant de fermeture de soupape d'admission du moteur à combustion interne étant modifié, une proportion du gaz d'échappement recirculé à l'extérieur étant augmentée dans un état de fonctionnement du moteur à combustion interne dans lequel la valeur lambda instantanée est supérieure à une valeur lambda cible souhaitée pour réduire la valeur lambda instantanée et ensuite, pour continuer de réduire la valeur lambda instantanée, l'instant de fermeture de la soupape d'admission étant déplacé dans le sens d'un retard jusqu'à ce que la valeur lambda cible soit atteinte.

**2.** Procédé selon la revendication 1, **caractérisé en ce que** pour faire varier l'instant de fermeture des soupapes d'admission, au moins un arbre à cames du moteur à combustion interne est réglé au moyen d'un déphaseur d'arbre à cames.

**3.** Procédé selon la revendication 2, **caractérisé en ce que** l'arbre à cames est réglé dans une plage d'angles de vilebrequin de 0° à 80°.

**4.** Procédé selon au moins l'une quelconque des revendications précédentes, **caractérisé en ce qu'**avant l'augmentation de la proportion du gaz d'échappement acheminé à l'extérieur, l'instant de fermeture des soupapes d'admission est ajusté dans le sens d'une avance à une valeur optimale pour le remplissage, optimale pour la puissance ou optimale pour les émissions.

**5.** Procédé selon au moins l'une quelconque des revendications précédentes, **caractérisé en ce qu'**avant l'augmentation de la proportion de gaz d'échappement acheminé à l'extérieur, l'instant de fermeture des soupapes d'admission est ajusté dans le sens d'une avance à partir d'une valeur optimale pour le remplissage, optimale pour la puissance ou optimale pour les émissions.

**6.** Procédé selon au moins l'une quelconque des revendications précédentes, **caractérisé en ce que** le moteur à combustion interne est le moteur à combustion interne d'un véhicule automobile.

**7.** Procédé selon au moins l'une quelconque des revendications précédentes, dans lequel le moteur à combustion interne est un moteur diesel ou un moteur à allumage par étincelle.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2005012306 A1
- DE 102006009958 A1

- EP 1460253 A1